# EUROPEAN PATENT SPECIFICATION

(11) **EP 4 088 878 B1**
(45) Date of publication and mention of the grant of the patent: **31.01.2024**
(21) Application number: 22169893.9
(22) Date of filing: 26.04.2022
(51) Int. Cl.: B25H 3/00, A47B 97/00, H02B 1/30, H02G 3/04

(54) **MULTIFUNCTIONAL CHANNEL AND CABINET PROVIDED WITH ONE OR MORE CHANNELS**
MULTIFUNKTIONALER KANAL UND SCHRANK MIT EINEM ODER MEHREREN KANÄLEN
CANAL MULTIFONCTIONNEL ET ARMOIRE POURVUE D'UN OU DE PLUSIEURS CANAUX

(30) Priority: 12.05.2021 IT 202100012164
(43) Date of publication of application: 16.11.2022
(73) Proprietor: Fami S.R.L., 36027 Rosà (VI) (IT)
(72) Inventor: MILANI, LUCA, 36028 ROSSANO VENETO (IT)
(74) Representative: Paparo, Aldo

(56) References cited:
- EP-A1- 2 639 904
- DE-U1-202015 006 719
- GB-A- 2 266 414
- US-A1- 2010 038 129
- US-A1- 2018 345 478
- US-A1- 2020 171 646
- US-B1- 6 323 421
- US-B1- 8 668 209

## Description

The present invention relates to a channel and a cabinet provided with one or more channels.

In various technical environments, workshops, production departments, laboratories, warehouses, cabinets are used to stow tools, consumables and other objects in order to protect them, store them, and/or stow them in an orderly manner after their use.

The cabinets, known in the market, generally have a parallelepiped shape with a pair of wings that favours the opening and closing of the cabinet and with a series of shelves on which to place the aforementioned material.

The rapid spread of rechargeable battery tools has made it increasingly necessary to create areas, located next to the space occupied by the tool at rest, to receive and connect the battery chargers.

In this context, the cabinets that house the tools must therefore provide power sockets where the battery chargers of the various tools can be connected.

Then there are situations in which, for the visibility to be improved inside the cabinet, some users prefer the application of lighting sources that, in order to work, need to be connected to the electrical grid.

As a result of these needs, cabinet manufacturers simply create an opening in a wall of the cabinet to allow the user to bring an electrical connection inside it which, depending on their needs, will then be branched into many sockets, generally by using multiple sockets, as many utilities as this will have to power.

In this context, everything is therefore delegated to the user's organisational skills, who generally limits himself to placing the multiple sockets on the shelves, to the detriment of the useful loading area that the shelf can have, or to fixing them to the walls, ruining and weakening the structure of the cabinet, exposing the areas of the walls adjacent to the holes to rust aggression.

It may therefore happen that, in addition to having a shelf in which tools and chargers are stowed in bulk, access to multiple sockets is particularly uncomfortable and/or that any increase in utilities to be powered generates violations of safety regulations (using, for example, exposed cables or violating the limits of connection of multiple sockets in series).

In addition, the cables of the various battery chargers can generate tangles inside the cabinet that make it uncomfortable to pick up a tool before its use.

Similar channels and cabinets as the ones aforementioned are disclosed in documents US2010/038129A1, DE202015006719U1, EP2639904A1, US6323421 B1, GB2266414A, US8668209B1 and US2020/171646A1. The technical task of the present invention is thus to provide a multifunctional channel and a relative cabinet provided with one or more channels capable of overcoming the drawbacks arising from the prior art.

It is therefore an object of the present invention to provide a channel that allows an orderly placement of all the connections necessary for charging and/or powering the various tools or other utilities.

Furthermore, it is an object of the present invention to provide a channel that does not occupy space above the shelf in order to maximize the loading plane of the various shelves.

Furthermore, it is an object of the present invention to provide a channel that can improve the flexibility of use of a cabinet, compared to the initial purchase configuration thereof, allows an expansion of the utilities to be connected to the electrical grid without having to revolutionize the loading layout of the cabinet and the layout of the previous electrical connections made.

A further object of the present invention is to provide a channel that can keep all the cables of the various battery chargers in order, whether these are rolled up, by means of clamps or bundled together, or whether these are unrolled or loose.

It is then a further object of the present invention to provide a cabinet that has one or more channels that can have an effective integration with the relative shelves and that are able to allow different mounting configurations giving a particular installation flexibility to the cabinet itself. The specified technical task and specified objects are substantially achieved by a multifunctional channel and relative cabinet provided with one or more channels comprising the technical features disclosed in one or more of the appended claims.

Further features and advantages of the present invention will become more apparent from the indicative and thus non-limiting description of an embodiment of a multifunctional channel and relative cabinet provided with one or more channels.

Such a description will be set out below with reference to the appended drawings, which are provided solely for illustrative and therefore non-limiting purposes, in which:
- figure 1 shows in perspective view a multifunctional channel in accordance with the present invention;
- figure 2 shows a frontal orthogonal projection of the channel of figure 1;
- figure 3 shows a section of the channel of figure 1 made according to plane III-III of figure 2;
- figure 4 shows in plan projection the channel of figure 1;
- figure 5 shows in axonometric view the channel of figure 1 coupled to a partition element of a cabinet;
- figure 6 shows in orthogonal projection the coupling of figure 5;
- figure 7 shows in axonometric view a cabinet 100 in accordance with the present invention provided with several channels 1;
- figure 8 shows in axonometric view the cabinet 100 of figure 7 with some parts removed to better illustrate others.
- figure 9 shows a detailed view of a detail of the channel 1 illustrating an assembly configuration.

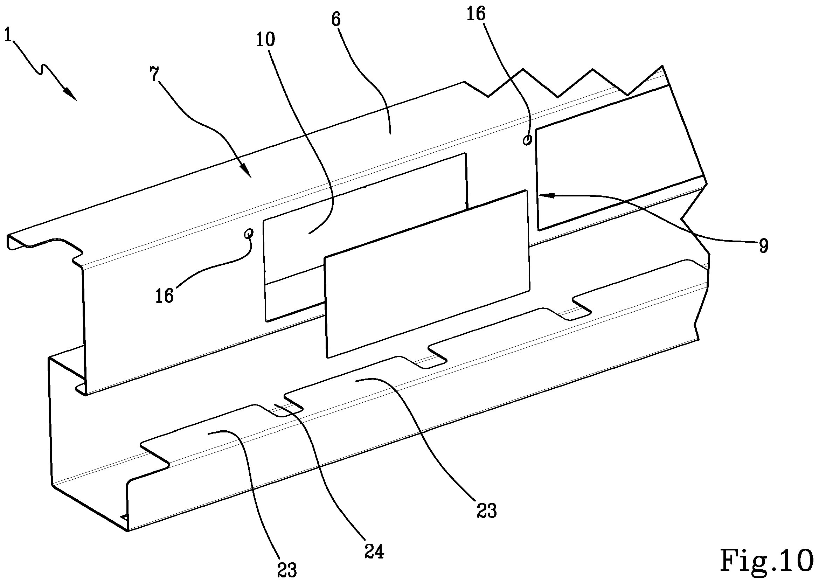

- figure 10 shows in perspective view a portion of the channel of figure 1 with a removed part.

With reference to the accompanying figures, 1 denotes in its entirety a multifunction channel, later also simply channel, and 100 denotes a cabinet provided with one or more channels 1.

A channel is an element for covering and housing electrical cables and which also acts, in the particular context of the present invention, as an element for positioning and fixing one or more sockets M.

In the present description, with the term multiple sockets M, reference will be made indistinctly to multiple sockets or single sockets, the first one being the most widespread and the second one being in any case applicable to the channel 1.

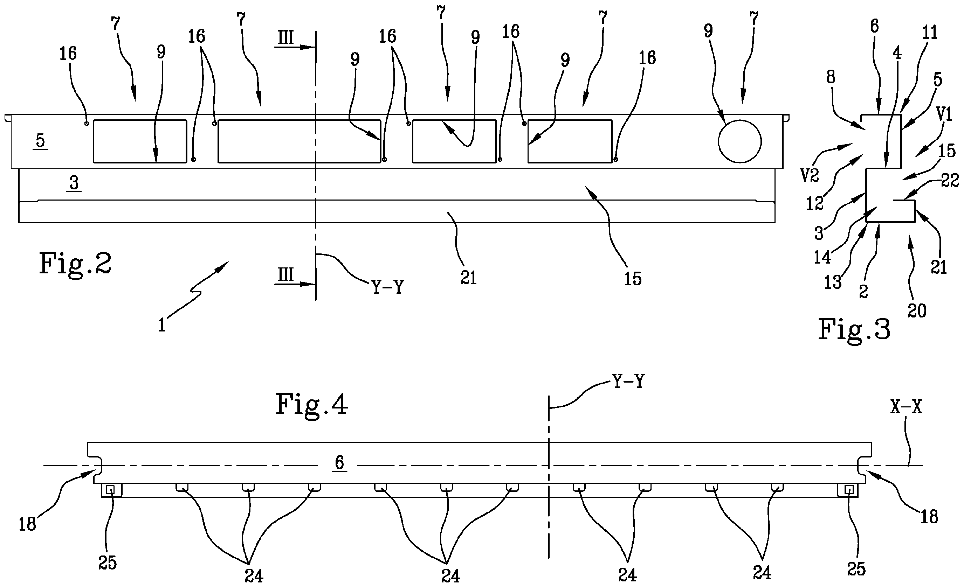

As can be seen from the accompanying figures, the channel 1 has a main extension along an axis X-X and is defined by a plurality of slab-shaped walls connected to each other. In cross section, illustrated in figure 3, the channel 1 has a "double C" shape, opposed and staggered between them, or in the form of a "2".

It is continued with the description below of the walls that make up the channel taking as reference a plane Y-Y, perpendicular to the axis X-X of extension of the channel 1, drawn in figure 2.

At the base of the channel 1 there is a base wall 2 of a slab-like shape with a main extension along the axis X-X. The base wall preferably lies horizontally with rectangular shape.

In connection with the base wall 2 there is a spacing wall 3.

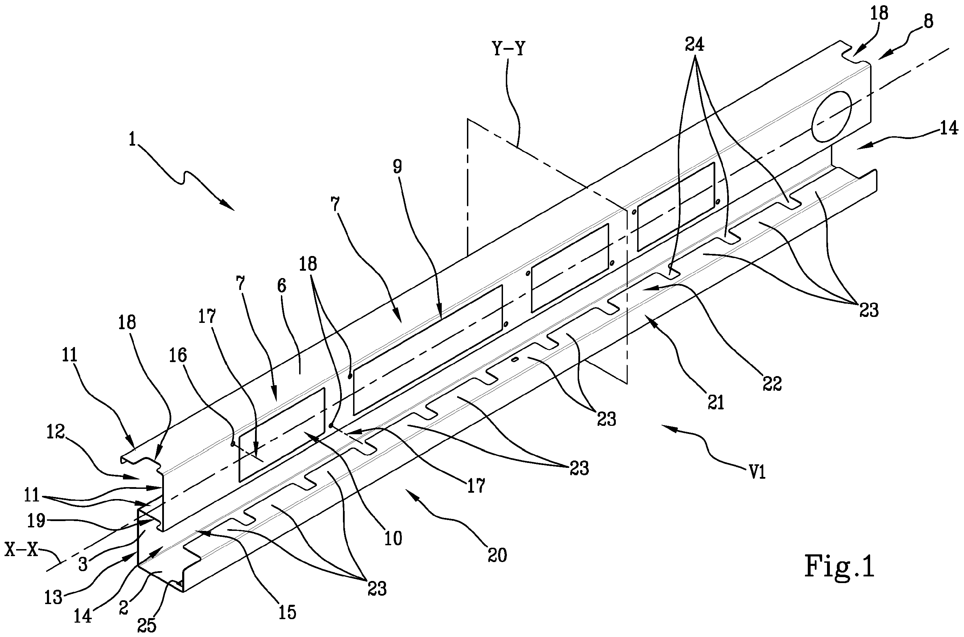

The spacing wall 3 extends, following the section plane Y-Y, away from the base wall 2 according to an angled direction and has a slab-like shape with a main extension along the axis X-X. Preferably the spacing wall 3 is perpendicular to the base wall 2. As can be seen in figures 1-4, the spacing wall 3 extends starting from an end of the base wall 2 that corresponds to a second side V2 of the channel 1.

Still from figure 1 it is possible to note how the base wall preferably lies vertically with a rectangular shape.

An intermediate wall 4 extends from the spacing wall 3. The intermediate wall extends away from the spacing wall 3 and is angled with respect thereto. More precisely, starting from the spacing wall 3, the intermediate wall 4 extends from the second side V2 towards a first side V1 of the channel 1, the first side V1 being opposed to the second side V2. Preferably the intermediate wall 4 is perpendicular to the spacing wall 3 and parallel to the base wall 2. The intermediate wall 4 has a slab-like shape with a main extension along an axis X-X.

The intermediate wall 4 preferably lies horizontally with a rectangular shape.

A facing wall 5, which extends away from the remaining aforementioned walls 2, 3, 4, rises from the intermediate wall 4. The facing wall 5 is angled with respect to the intermediate wall 4 preferably perpendicular thereto and parallel to the spacing wall 3.

The facing wall 5 also has a slab-like shape with a main extension along an axis X-X.

Said facing wall 5 preferably lies vertically with a rectangular shape.

From the facing wall 5 there extends a top wall 6 which extends away from the facing wall in a direction that goes from the first side V1 to the second side V2.

The top wall 6 is angled with respect to the facing wall 5, preferably perpendicular thereto and parallel to the intermediate wall 4 and to the base wall 2.

The top wall 6 also has a slab-like shape with a main extension along an axis X-X.

Base wall 2, spacing wall 3 and intermediate wall 4 are connected to each other to delimit a second compartment 14. In other words, base wall 2, spacing wall 3 and intermediate wall 4 form together a second box body 13, whose cross-section is C-shaped, defining the second compartment 14.

The second compartment 14 has a substantially parallelepiped shape that is open on one side, the side V1, which defines an opening 15.

Similarly, intermediate wall 4, facing wall 5 and top wall 6 are connected to each other to delimit a first compartment 8, preferably parallelepiped-shaped. Intermediate wall 4, facing wall 5 and top wall 6 form together a first box body 11 defining the first compartment 8 therein, with an opening 12 turned towards the first side V1 of the channel 1.

As will be better described below, the first compartment 8 is used to receive the multiple sockets M while the second compartment 14 is used to accommodate and order the cables of the utilities connected to the multiple sockets M.

The facing wall 5 has a plurality of areas 7 detachable from the wall to generate respective openings 10 on the wall itself.

As can be seen in figure 1, each area 7 is circumscribed by a weakening cut 9 with a closed outline. Said area 7 preferably has a quadrangular or circular outline. The weakening cut 9 is preferably made by laser cut with possible microjunctions.

Depending on the needs of the user, it is possible to apply a small pressure on the weakening cut 9, then on the area 7 circumscribed by it, so as to detach the aforementioned area 7 from the facing wall 5. In this way, a window 10 is generated on the facing wall 5 that allows the operator to apply the multiple socket M inside it. In this way, the multiple socket M can be housed inside the first compartment 8 and positioned so that the sockets are facing the window 10 frontally and are accessible through it.

Different windows 10 of different sizes can therefore be generated at the facing wall 5 depending on the needs of the operator. To cite a few examples, the windows may be of such size as to receive circuit breakers, multi-sockets with multiple compartments, and round sockets for example with USB inlets and/or with other sockets.

Again at the facing wall 5, in an area surrounding each area 7 there are, outside the area circumscribed by the weakening cut 9, a plurality of holes 16 engageable by corresponding fixing means 17, depicted in figure 1 in a schematic way, to block a multiple socket M inside the first compartment and in contact with the facing wall 5.

To give an example, always taking figure 1 or 2 as a reference, there are two holes 16 positioned on a diagonal of an area 7 with a substantially rectangular shape.

Once the area 7 is detached and the multiple socket M is inserted inside the first compartment 8, the latter is slid until it reaches the window 10 just generated by detaching the respective area 7. Once the multiple socket M is positioned frontally and centrally to the window 10, it is locked by screwing the fixing means 17 through the holes 16 and on the multiple socket itself. In this way the multiple socket M is locked on the channel 1 ready for use.

As an alternative to the holes 16, the multiple socket M can be locked by means of a counter-frame or by means of an interlocking coupling between socket M and window 10.

At the top wall 6 there is a first pair of gaps 18. Said first pair of gaps 18 is distributed at the opposite ends of the channel 1 along the axis X-X of extension of the channel 1, each gap being located at the opposite end of the top wall 6. Each gap belonging to the first pair 18 enables electric cables to pass inside the first compartment 8 or towards the outside thereof.

Generally, with greater frequency when applying this channel 1, the multiple sockets M can be powered by electrical cables that enter the first compartment 8 crossing transversally the top wall 6.

In the same way, the intermediate wall 4 also has, at the opposite ends, a second pair of gaps 19. The second pair of gaps 19 is likewise distributed at the opposite ends of the channel 1 along the axis X-X, i.e. at the opposite ends of the intermediate wall 4.

Also the second pair of gaps 19 allows the transverse passage, that is, along an axis incident on the axis X-X of the channel, of electrical cables that can extend from the first compartment 8 to the second compartment 14.

The base wall 2, as opposed to where the spacing part 3 extends, has an extension 20.

The extension 20 is defined by two sections, a first section 21, preferably orthogonal to the base wall 2, and a second section 22, preferably parallel to the base wall 2 and extending towards the spacing wall 3

The second section 22 consists of a plurality of shelves 23 interspersed with each other by a plurality of windowings 24. The plurality of shelves 23 and the plurality of windowings 24 cooperate with each other to generate, on the second section 22, alternating empty and full spaces. The cables of the various utilities connected to the multiple sockets M or coming from other areas of the cabinet are therefore arranged inside the second compartment 14, to which the extension 20 faces. To allow a more orderly arrangement of the cables, the user can arrange the cables of the various utilities between the empty and full spaces, precisely generated by the alternation of windowings 24 and shelves 23, so as to avoid twisted cables or disordered cables that could be an obstacle to the normal use of the tools.

The small folding obtained by the extension 20 then generates a recess within which the cables of the various utilities can possibly be placed, preferably tied together with clamps, if the user does not wish to take advantage of the conformation of the second section 22. Also in this case, the electrical cables are still protected and arranged in an orderly manner. Next, at the base wall 2 there is a pair of holes 25, arranged on the base wall 2 at the opposite ends of the axis X-X of the extension thereof, to allow the fixing of the channel to an abutment surface through locking means that will be better detailed later.

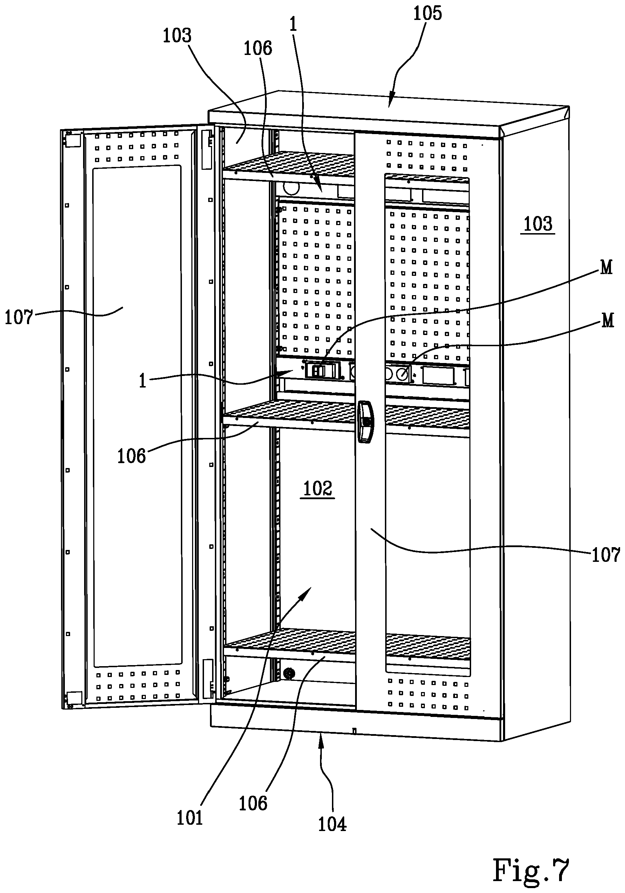

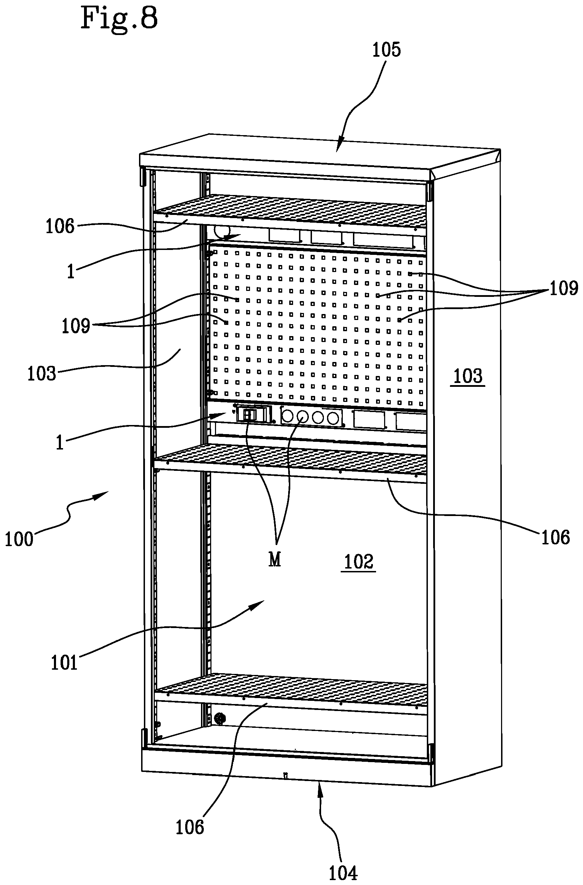

An object of the present invention is also a cabinet 100 comprising one or more channels 1 in accordance with the present invention and illustrated in figures 7 and 8.

The cabinet 100 has internally a containment compartment 101 to receive solid materials and/or liquid materials and/or equipment or tools.

The compartment 101, hence the cabinet 100, is defined by a pair of side walls 103, parallel to each other, connected behind to a back 102. The pair of side walls 103 defines the width of the containment compartment 101. The compartment 101 is closed above by a ceiling 105 and below by a bottom 104 connected to the pair of side walls 103.

In contrast to the back 102 there is a pair of wings 107, laterally connected to the pair of side walls 103, adapted to favour the opening and closing of the cabinet 100.

The compartment 101, inside the cabinet 100, can be divided into material containment fractions through one or more shelves 106 that can be connected to the pair of side walls 103 and to the back 102.

In other words, each shelf 106 has a slab-like shape and is connectable by engagement to the pair of side walls 103 and to the back 102 at its peripheral outline.

Each shelf 106, as can be seen in the accompanying figures, has a plurality of multipurpose cavities 109. For example, the aforementioned plurality of cavities 109 can be used either to receive tool locking pins, whether the shelf 106 is used horizontally or whether it is used vertically, or it can be used to apply shelf divider bulkheads 106, tool bushings, case supports, etc.

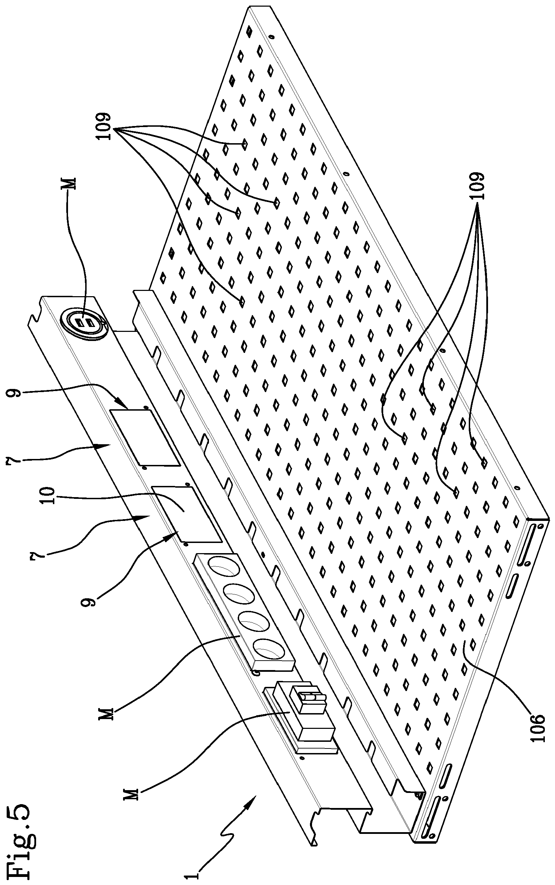

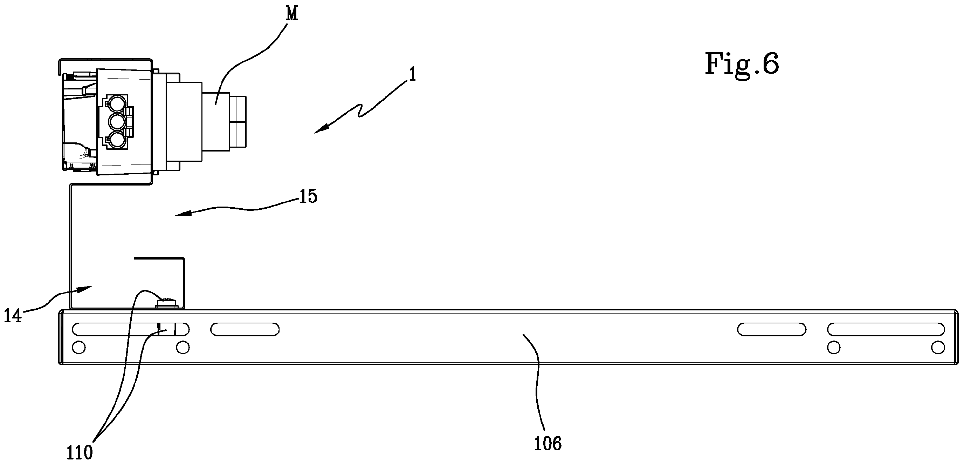

In a first assembly configuration, the channel 1 is positioned above the shelf 106, as illustrated in figures 5 and 6. More particularly, the channel 1 is positioned so that the base surface 2 is placed resting above the shelf 106 and the spacing wall 3 is in contact with the back 102.

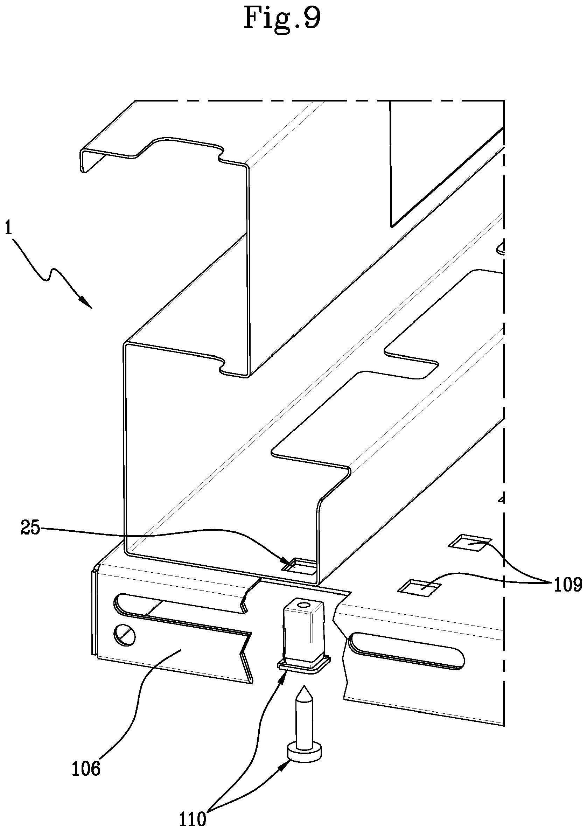

In this first assembly configuration, the channel 1 is connectable to the shelf 106 through expanding connection means 110 engageable respectively in the pair of holes 25, obtained on the base wall 2, and in the plurality of holes 109 obtained on the shelf 106 (this connection is illustrated in detail in figure 9).

As an alternative to the expanding connection means 110, the connection can be through screws and nuts.

In this assembly configuration, the channel 1 is placed precisely above the shelf 106 and the multiple sockets M associated therewith are accessible above the shelf 106 (configuration illustrated, for example, in the median area of the cabinet 100 depicted in figures 7 and 8)

This first assembly configuration is particularly functional if the user wishes to have a front access to the channel 1 and therefore to the various multiple sockets M.

In a second assembly configuration, the channel 1 is positioned below the shelf 106. The modality of connecting the channel 1 to the shelf 106 is similar to the one previously described with the difference in that the channel is positioned below the shelf 106. More particularly, the channel 1 is positioned so that the base surface 2 is placed in contact with the lower part of the shelf 106 and the spacing wall 3 is resting on the back 102. Also in this case the channel is connectable to the shelf 106 through the expanding connection means 110 respectively engageable in the pair of holes 25, obtained in the base wall and in the plurality of holes 109 obtained on the shelf. In this assembly configuration, the channel is placed precisely below the shelf 106 and the multiple sockets M associated therewith are accessible below the shelf 106 (configuration illustrated, for example, in the upper area of the cabinet 100 depicted in figures 7 and 8). This second assembly configuration is particularly functional in the event that the user needs the entire loading depth of the shelf 106 but at the same time does not want to give up the possibility of having electrical power sockets. This case may occur when the user, above the shelf 106, must stow objects that have sizes such as to require the entire loading depth of the shelf.

By comparing the first assembly configuration with the second assembly configuration it is possible to note how mounting takes place in the same orientation modality as the channel 1 overturned by 180 degrees.

In the first assembly configuration, a further shelf 106 can be applied in contact with the back 102 and oriented so that the further shelf 106 is placed sideways resting on the channel 1 in turn fixed to the lower shelf 106. In other words, two shelves 106 assume an L-shaped configuration with interposition, at the vertex, of the channel 1. In this further assembly modality, the further shelf 106 is resting sideways on the channel 1 below and at the same time is locked in the direction orthogonal thereto by means of stops fixed to the structure of the cabinet 100.

Said stops provide a stopping abutment of the further shelf 106 located at the rear in contact with the back 102.

In this configuration, the user can have in addition to the shelf 106, placed horizontally for the normal loading of objects, also the further shelf 106, placed vertically, for hanging tools or other objects.

This configuration of use is visible in the median part of the cabinet 100, depicted in figures 7 and 8, where it is possible to note a shelf 106 lying horizontally and the further shelf 106 lying vertically.

Advantageously, the present invention is able to overcome the drawbacks which have emerged from the prior art.

Advantageously, the channel 1 allows the cabinet 100 to be rationally and functionally "electrified". In other words, the channel 1 allows to have several multiple sockets M occupying little space and guaranteeing easy access to them.

In case of expansion of the utilities to be powered or recharged and therefore of the number of multiple sockets M to be connected, the channel allows an increase of electrical connections without particular difficulties and maintaining a rational and functional layout.

In addition, the entire set of plurality of shelves 23, plurality of windowings 24 and first and second pair of gaps 18, 19 makes it possible to create an orderly and protected arrangement of electrical cables.

## Claims

1. A multifunctional channel (1) housable inside a cabinet (100) having a containment compartment (101), defined by a back (102), a pair of side walls (103), a bottom (104) and a ceiling (105), which is dividable by shelves (106) and is closable by at least one pair of wings (107), said channel having an extension along an axis (X-X) and comprising in cross section, according to a plane (Y-Y) perpendicular to the axis (X-X):
- a base wall (2) that is engageable, resting on or connected to a shelf (106);
- a spacing wall (3), connected to the base wall (2) and extending away therefrom according to a direction that is angled with respect, preferably perpendicular to the base wall (2);
- an intermediate wall (4), connected to the spacing wall (3) and extending away from the spacing wall (3) according to a direction that is substantially parallel to the base wall (2);
- a facing wall (5), connected to the intermediate wall (4) and extending away from the remaining walls (2,3,4), lying in an angled manner preferably perpendicularly, with respect to the intermediate wall (4);
- a top wall (6), connected to the facing wall (5) and extending away from the latter according to a direction substantially parallel to the intermediate wall (4); said walls (2,3,4,5,6) each having a slab-shaped extension with main extension along the axis (X-X) and a substantially rectangular outline;
**characterized in that** said intermediate, facing and top walls (4,5,6) define together a first compartment (8), preferably of parallelepiped shape, that can be occupied by one or more single or multiple sockets (M) and **in that** said facing wall (5) has a plurality di areas (7), each circumscribed by a weakening cut (9) with a closed outline; each area (7) being, by a break, detachable from the facing wall (5) to generate a window (10), which is engageable by a single or multiple socket (M), defining an access opening inside the first compartment (8).

2. The channel (1) according to claim 1 **characterized in that** said intermediate (4), facing (5), and top (6) walls form together a first box body (11), internally defining the first compartment (8), with an opening (12) turned towards a second side (V2) of the channel (1).

3. The channel (1) according to claim 2 **characterized in that** said base (2), spacing (3) and intermediate (4) walls together form a second box body (13), internally defining a second compartment (14), with an opening (15) turned towards a first side (V1) of the channel opposite the second side (V2); said second compartment (14) enabling possible electric cables running through the second compartment (14) along the axis (X-X) to be received and ordered.

4. The channel (1) according to claim 1 **characterized in that** each opening (7) has a polygonal and/or circular outline.

5. The channel (1) according to claim 4 **characterized in that** said facing wall (5), at each opening (7), has a plurality of holes (16), located on and outside the weakening cut (9), which are adjustable by corresponding fixing means (17) to lock a multiple socket (M), inside the first compartment (8), in contact with the facing wall (5).

6. The channel (1) according to claim 1 **characterized in that** said top wall (6) has at opposite ends a first pair of gaps (18) which is adapted to enable electric wires to pass through the top wall (6); said first pair of gaps (18) being opposed along the axis (X-X).

7. The channel (1) according to claim 1 **characterized in that** said intermediate wall (4) has at opposite ends a second pair of gaps (19) which is adapted to enable electric wires to pass through the intermediate wall (4); said second pair of gaps (19) being opposed along an axis (X-X).

8. The channel (1) according to claim 1 **characterized in that** said base wall (2) has, opposite the side where the spacing wall (3) extends, an extension (20), angled with respect to the base wall (2), having a first section (21), preferably orthogonal to the base wall (2), and a second section (22), preferably parallel to the base wall (2) and extending towards the spacing wall (3).

9. The channel (1) according to claim 8, **characterized in that** said second section (22) is defined by a plurality of shelves (23) interspersed by a plurality of windowings (24); said plurality of shelves (23) and said plurality of windowings (24) cooperating together to define alternating empty and full spaces on which to wind electric cables running through the channel along the axis (X-X).

10. The channel (1) according to claim 1 **characterized in that** said base wall (2) has at the opposite ends, along the extension axis (X-X), a pair of holes (25) that is adapted to receive fixing means to connect the base wall (2) to an abutment surface.

11. A cabinet (100) defining a containment compartment (101) to receive solid materials and/or liquid material in containers and comprising:
- a pair of side walls (103), connected behind to a back (102), defining the width of the cabinet (100);
- a bottom (104) and a ceiling (105), connected respectively below and above to the pair of side walls (103), which together define the height of the cabinet (100);
- a pair of wings (107) connected to the pair of side walls (103) and opposed to the back (102) to open and close the containment compartment (101) of the cabinet;
- at least one shelf (106), fixed to the pair of side walls (103) and to the back (102), adapted to divide the containment compartment (101) into further containment volumes; said shelf having a plurality of holes (109); **characterized in that** it comprises at least one channel (1) according to one or more of the preceding claims to enable a plurality of multiple sockets (M) to be removably locked to the cabinet (100).

12. The cabinet (100) according to claim 11 **characterized in that** said channel (1) is connected to the cabinet (100) and to the at least one shelf (106), placing, in a first assembly configuration, the base surface (2) resting above on the shelf (106) and the spacing wall (3) resting on the back (102); said channel (1) being connectable to the shelf (106) by clamping expanding connection means (110) engageable on the pair of holes (25), present on the base wall (2), and in the plurality of holes (109) present on the shelf (106); said plurality of multiple sockets (M) connected to the channel (1) being accessible above the shelf (106).

13. The cabinet (100) according to claim 11 **characterized in that** said channel (1) is connected to the cabinet (100) and to the at least one shelf (106), placing, in a second assembly configuration, the base surface (2) resting below on the shelf (106) and the spacing wall (3) resting on the back (102); said channel (1) being connectable to the shelf (106) by clamping expanding connection means (110) engageable on the pair of holes (25), present on the base wall (2), and in the plurality of holes (109) present on the shelf (106); said plurality of multiple sockets (M) connected to the channel (1) being accessible below the shelf (106).

14. The cabinet (100) according to claim 12 **characterized in that** when the channel (1) and the shelf (106) are connected in the first assembly configuration, a further shelf (106) abutting on the back (102) is placed alongside resting on the channel (1) and is locked in a direction orthogonal thereto by fixing means connected to the cabinet (100).

## Patentansprüche

1. Multifunktionaler Kanal (1), der in einem Schrank (100) untergebracht werden kann, der eine Aufnahmeunterteilung (101) aufweist, der durch eine Rückseite (102), ein Paar Seitenwände (103), einen Boden (104) und eine Decke (105) definiert ist, der durch Regalböden (106) unterteilbar ist und durch mindestens ein Paar Flügel (107) verschließbar ist, wobei der Kanal eine Erstreckung entlang einer Achse (X-X) aufweist und im Querschnitt gemäß einer Ebene (Y-Y) senkrecht zur Achse (X-X) Folgendes umfasst:
- eine Basiswand (2), die mit einem Regalboden (106) in Eingriff bringbar ist, auf diesem ruht oder mit diesem verbunden ist,
- eine Abstandswand (3), die mit der Basiswand (2) verbunden ist und sich von dieser in einer Richtung wegführend erstreckt, die in Bezug auf die Basiswand abgewinkelt, vorzugsweise senkrecht zur Basiswand (2) ist,
- eine Zwischenwand (4), die mit der Abstandswand (3) verbunden ist und sich von der Abstandswand (3) in einer Richtung wegführend erstreckt, die im Wesentlichen parallel zur Basiswand (2) ist,
- eine Vorderwand (5), die mit der Zwischenwand (4) verbunden ist und sich von den übrigen Wänden (2,3,4) wegführend erstreckt, die abgewinkelt, vorzugsweise rechtwinklig zur Zwischenwand (4) liegen,
- eine Oberwand (6), die mit der Vorderwand (5) verbunden ist und sich von dieser in einer Richtung wegführend erstreckt, die im Wesentlichen parallel zur Zwischenwand (4) ist, wobei die Wände (2,3,4,5,6) jeweils eine plattenförmige Erstreckung mit Haupterstreckung entlang der Achse (X-X) und einem im Wesentlichen rechteckigen Umriss aufweisen,
**dadurch gekennzeichnet, dass** die Zwischenwand, die Vorderwand und die Oberwand (4,5,6) zusammen eine erste Unterteilung (8), vorzugsweise von parallelepipedförmiger Form, bilden, die von einer oder mehreren Einfach- oder Mehrfachsteckdosen (M) belegt werden kann und in der Vorderwand (5) mehrere Bereiche (7) aufweist, die jeweils von einem Schwächungsschnitt (9) mit geschlossenem Umriss umschrieben sind, wobei ein jeder Bereich (7) durch einen Bruch von der Vorderwand (5) abtrennbar ist, um ein Fenster (10) zu erzeugen, in das eine Einzel- oder Mehrfachsteckdose (M) in Eingriff gebracht werden kann, das eine Zugangsöffnung in der ersten Unterteilung (8) definiert.

2. Kanal (1) nach Anspruch 1, **dadurch gekennzeichnet, dass** die Zwischenwand (4), die Vorderwand (5) und die Oberwand (6) zusammen einen ersten Kastenkörper (11) bilden, der innen die erste Unterteilung (8) mit einer Öffnung (12) definiert, die einer zweiten Seite (V2) des Kanals (1) zugewandt ist.

3. Kanal (1) nach Anspruch 2, **dadurch gekennzeichnet, dass** die Basiswand (2), die Abstandswand (3) und die Zwischenwand (4) zusammen einen zweiten Kastenkörper (13) bilden, der innen eine zweite Unterteilung (14) mit einer Öffnung (15) definiert, die einer ersten Seite (V1) des Kanals zugewandt ist, die der zweiten Seite (V2) gegenüberliegt, wobei die zweite Unterteilung (14) ermöglicht, dass mögliche elektrische Kabel, die durch die zweite Unterteilung (14) entlang der Achse (X-X) verlaufen, aufgenommen und angeordnet werden.

4. Kanal (1) nach Anspruch 1, **dadurch gekennzeichnet, dass** eine jede Öffnung (7) einen polygonalen und/oder kreisförmigen Umriss aufweist.

5. Kanal (1) nach Anspruch 4, **dadurch gekennzeichnet, dass** die Vorderwand (5) an einer jeden Öffnung (7) mehrere Löcher (16) aufweist, die sich auf und außerhalb des Schwächungsschnitts (9) befinden, die durch entsprechende Befestigungsmittel (17) einstellbar sind, um eine Mehrfachsteckdose (M) in der ersten Unterteilung (8) in Kontakt mit der Vorderwand (5) zu verriegeln.

6. Kanal (1) nach Anspruch 1, **dadurch gekennzeichnet, dass** die Oberwand (6) an gegenüberliegenden Enden ein erstes Paar Lücken (18) aufweist, das geeignet ist, den Durchgang elektrischer Drähte durch die Oberwand (6) zu ermöglichen, wobei das erste Paar Lücken (18) entlang der Achse (X-X) gegenüberliegend ist.

7. Kanal (1) nach Anspruch 1, **dadurch gekennzeichnet, dass** die Zwischenwand (4) an gegenüberliegenden Enden ein zweites Paar Lücken (19) aufweist, das geeignet ist, den Durchgang elektrischer Drähte durch die Zwischenwand (4) zu ermöglichen, wobei das zweite Paar Lücken (19) entlang einer Achse (X-X) gegenüberliegend ist.

8. Kanal (1) nach Anspruch 1, **dadurch gekennzeichnet, dass** die Basiswand (2) gegenüber der Seite, wo sich die Abstandswand (3) erstreckt, eine Verlängerung (20) aufweist, die in Bezug auf die Basiswand (2) abgewinkelt ist, die einen ersten Abschnitt (21), der vorzugsweise orthogonal zur Basiswand (2) ist, und einen zweiten Abschnitt (22) aufweist, der vorzugsweise parallel zur Basiswand (2) ist und sich in Richtung der Abstandswand (3) erstreckt.

9. Kanal (1) nach Anspruch 8, **dadurch gekennzeichnet, dass** der zweite Abschnitt (22) durch mehrere Regalböden (23) definiert ist, die durch mehrere Fensterungen (24) durchsetzt sind, wobei die mehreren Regalböden (23) und die mehreren Fensterungen (24) zusammenwirken, um abwechselnd leere und volle Räume zu definieren, auf denen elektrische Kabel, die durch den Kanal entlang der Achse (X-X) verlaufen, aufgewickelt werden können.

10. Kanal (1) nach Anspruch 1, **dadurch gekennzeichnet, dass** die Basiswand (2) an den gegenüberliegenden Enden entlang der Erstreckungsachse (X-X) ein Paar Löcher (25) aufweist, die geeignet sind, Befestigungsmittel aufzunehmen, um die Basiswand (2) mit einer Anlagefläche zu verbinden.

11. Schrank (100), der eine Aufnahmeunterteilung (101) zum Aufnehmen von festen Materialien und/oder eines flüssigen Materials in Behältern definiert und Folgendes umfasst:
- ein Paar Seitenwände (103), die hinten mit einer Rückseite (102) verbunden sind, die die Breite des Schranks (100) definieren,
- einen Boden (104) und eine Decke (105), die jeweils unten und oben mit dem Paar Seitenwände (103) verbunden sind, die zusammen die Höhe des Schranks (100) definieren,
- ein Paar Flügel (107), die mit dem Paar Seitenwände (103) verbunden sind und der Rückseite (102) gegenüberliegen, um die Aufnahmeunterteilung (101) des Schranks zu öffnen und zu schließen,
- mindestens einen Regalboden (106), der an dem Paar Seitenwände (103) und an der Rückseite (102) befestigt ist, der geeignet ist, die Aufnahmeunterteilung (101) in weitere Aufnahmevolumen zu unterteilen, wobei der Regalboden mehrere Löcher (109) aufweist,
**dadurch gekennzeichnet, dass** er mindestens einen Kanal (1) nach einem oder mehreren der vorhergehenden Ansprüche umfasst, um zu ermöglichen, dass mehrere Mehrfachsteckdosen (M) an dem Schrank (100) lösbar verriegelt werden.

12. Schrank (100) nach Anspruch 11, **dadurch gekennzeichnet, dass** der Kanal (1) mit dem Schrank (100) und dem mindestens einen Regalboden (106) verbunden ist, indem die Grundfläche (2) in einer ersten Montagekonfiguration oben auf dem Regalboden (106) aufliegend und die Abstandswand (3) auf der Rückseite (102) aufliegend platziert wird, wobei der Kanal (1) mit dem Regalboden (106) durch Klemmen von sich ausdehnenden Verbindungsmitteln (110) verbindbar ist, die in das Paar Löcher (25), die in der Basiswand (2) vorhanden sind, und in die mehreren Löcher (109), die auf dem Regalboden (106) vorhanden sind, eingreifen können, wobei die mehreren Mehrfachsteckdosen (M), die mit dem Kanal (1) verbunden sind, über dem Regalboden (106) zugänglich sind.

13. Schrank (100) nach Anspruch 11, **dadurch gekennzeichnet, dass** der Kanal (1) mit dem Schrank (100) und dem mindestens einen Regalboden (106) verbunden ist, indem die Grundfläche (2) in einer zweiten Montagekonfiguration unter dem Regalboden (106) aufliegend und die Abstandswand (3) auf der Rückseite (102) aufliegend platziert wird, wobei der Kanal (1) mit dem Regalboden (106) durch Klemmen von sich ausdehnenden Verbindungsmitteln (110) verbindbar ist, die in das Paar Löcher (25), die in der Basiswand (2) vorhanden sind, und in die mehreren Löcher (109), die auf dem Regalboden (106) vorhanden sind, eingreifen können, wobei die mehreren Mehrfachsteckdosen (M), die mit dem Kanal (1) verbunden sind, unter dem Regalboden (106) zugänglich sind.

14. Schrank (100) nach Anspruch 12, **dadurch gekennzeichnet, dass**, wenn der Kanal (1) und der Regalboden (106) in der ersten Montagekonfiguration verbunden sind, ein weiterer Regalboden (106), der an der Rückseite (102) anliegt, daneben aufliegend auf dem Kanal (1) platziert wird und in einer dazu orthogonalen Richtung durch Befestigungsmittel verriegelt wird, die mit dem Schrank (100) verbunden sind.

## Revendications

1. Canal multifonctionnel (1) pouvant être logé à l'intérieur d'une armoire (100) ayant un compartiment de confinement (101), défini par un dos (102), une paire de parois latérales (103), un fond (104) et un plafond (105), qui peut être divisé par des étagères (106) et peut être fermé par au moins une paire d'ailes (107), ledit canal ayant une extension le long d'un axe (X-X) et comprenant en section transversale, selon un plan (Y-Y) perpendiculaire à l'axe (X-X) :
- une paroi de base (2) pouvant être engagée, reposant sur ou reliée à une étagère (106) ;
- une paroi d'espacement (3), reliée à la paroi de base (2) et s'étendant à partir de celle-ci selon une direction qui est inclinée par rapport à celle-ci, de préférence perpendiculaire à la paroi de base (2) ;
- une paroi intermédiaire (4), reliée à la paroi d'espacement (3) et s'étendant à partir de la paroi d'espacement (3) selon une direction sensiblement parallèle à la paroi de base (2) ;
- une paroi frontale (5), reliée à la paroi intermédiaire (4) et s'étendant à partir des parois restantes (2, 3, 4), couchée d'une manière angulaire de préférence perpendiculairement, par rapport à la paroi intermédiaire (4) ;
- une paroi supérieure (6), reliée à la paroi frontale (5) et s'étendant à partir de celle-ci selon une direction substantiellement parallèle à la paroi intermédiaire (4) ; lesdites parois (2, 3, 4, 5, 6) ayant chacune une extension en forme de plaque avec une extension principale le long de l'axe (X-X) et un contour substantiellement rectangulaire ;
**caractérisé en ce que** lesdites parois intermédiaire, frontale et supérieure (4, 5, 6) définissent ensemble un premier compartiment (8), de préférence de forme parallélépipédique, qui peut être occupé par une ou plusieurs prises simples ou multiples (M) et **en ce que** ladite paroi frontale (5) a une pluralité de zones (7), chacune circonscrite par une découpe d'affaiblissement (9) avec un contour fermé ; chaque zone (7) étant, par une rupture, détachable de la paroi frontale (5) pour générer une fenêtre (10), qui peut être engagée par une prise simple ou multiple (M), définissant une ouverture d'accès à l'intérieur du premier compartiment (8).

2. Canal (1) selon la revendication 1, **caractérisé en ce que** lesdites parois intermédiaire (4), frontale (5) et supérieure (6) forment ensemble un premier corps de boîtier (11), définissant intérieurement le premier compartiment (8), avec une ouverture (12) tournée vers un second côté (V2) du canal (1).

3. Canal (1) selon la revendication 2, **caractérisé en ce que** lesdites parois de base (2), d'espacement (3) et intermédiaire (4) forment ensemble un second corps de boîtier (13), définissant intérieurement un second compartiment (14), avec une ouverture (15) tournée vers un premier côté (V1) du canal opposé au second côté (V2) ; ledit second compartiment (14) permettant de recevoir et d'ordonner d'éventuels câbles électriques traversant le second compartiment (14) le long de l'axe (X-X).

4. Canal (1) selon la revendication 1, **caractérisé en ce que** chaque ouverture (7) a un contour polygonal et/ou circulaire.

5. Canal (1) selon la revendication 4, **caractérisé en ce que** ladite paroi frontale (5), au niveau de chaque ouverture (7), a une pluralité de trous (16), situés sur et à l'extérieur de la découpe d'affaiblissement (9), qui sont réglables par des moyens de fixation correspondants (17) pour verrouiller une prise multiple (M), à l'intérieur du premier compartiment (8), en contact avec la paroi frontale (5).

6. Canal (1) selon la revendication 1, **caractérisé en ce que** ladite paroi supérieure (6) a à ses extrémités opposées une première paire d'espaces (18) qui est adaptée pour permettre aux fils électriques de passer à travers la paroi supérieure (6) ; ladite première paire d'espaces (18) étant opposée le long de l'axe (X-X).

7. Canal (1) selon la revendication 1, **caractérisé en ce que** ladite paroi intermédiaire (4) a à ses extrémités opposées une seconde paire d'espaces (19) qui est adaptée pour permettre aux fils électriques de passer à travers la paroi intermédiaire (4) ; ladite seconde paire d'espaces (19) étant opposée le long d'un axe (X-X).

8. Canal (1) selon la revendication 1, **caractérisé en ce que** ladite paroi de base (2) a, à l'opposé du côté où s'étend la paroi d'espacement (3), une extension (20), inclinée par rapport à la paroi de base (2), ayant une première section (21), de préférence orthogonale à la paroi de base (2), et une seconde section (22), de préférence parallèle à la paroi de base (2) et s'étendant vers la paroi d'espacement (3).

9. Canal (1) selon la revendication 8, **caractérisé en ce que** ladite seconde section (22) est définie par une pluralité d'étagères (23) entrecoupées par une pluralité de fenêtres (24) ; ladite pluralité d'étagères (23) et ladite pluralité de fenêtres (24) coopérant ensemble pour définir des espaces vides et pleins alternés sur lesquels enrouler des câbles électriques traversant le canal le long de l'axe (X-X).

10. Canal (1) selon la revendication 1, **caractérisé en ce que** ladite paroi de base (2) a aux extrémités opposées, le long de l'axe d'extension (X-X), une paire de trous (25) qui est adaptée pour recevoir des moyens de fixation pour relier la paroi de base (2) à une surface de butée.

11. Armoire (100), définissant un compartiment de confinement (101) pour recevoir des matériaux solides et/ou un matériau liquide dans des conteneurs et comprenant :
- une paire de parois latérales (103), reliée derrière un dos (102), définissant la largeur de l'armoire (100) ;
- un fond (104) et un plafond (105), reliés respectivement en dessous et au-dessus de la paire de parois latérales (103), qui définissent ensemble la hauteur de l'armoire (100) ;
- une paire d'ailes (107), reliée à la paire de parois latérales (103) et opposée au dos (102) pour ouvrir et fermer le compartiment de confinement (101) de l'armoire ;
- au moins une étagère (106), fixée à la paire de parois latérales (103) et au dos (102), adaptée pour diviser le compartiment de confinement (101) en d'autres volumes de confinement ; ladite étagère ayant une pluralité de trous (109) ;
**caractérisée en ce qu'**il comprend au moins un canal (1) selon une ou plusieurs des revendications précédentes pour permettre à une pluralité de prises multiples (M) d'être verrouillées de manière amovible à l'armoire (100).

12. Armoire (100) selon la revendication 11, **caractérisée en ce que** ledit canal (1) est relié à l'armoire (100) et à l'au moins une étagère (106), plaçant, dans une première configuration d'assemblage, la surface de base (2) reposant au-dessus de l'étagère (106) et la paroi d'espacement (3) reposant sur le dos (102) ; ledit canal (1) pouvant être relié à l'étagère (106) par des moyens de connexion à expansion par serrage (110) pouvant être engagés sur la paire de trous (25), présents sur la paroi de base (2), et dans la pluralité de trous (109) présents sur l'étagère (106) ; ladite pluralité de prises multiples (M) reliée au canal (1) étant accessible au-dessus de l'étagère (106).

13. Armoire (100) selon la revendication 11, **caractérisée en ce que** ledit canal (1) est relié à l'armoire (100) et à l'au moins une étagère (106), plaçant, dans une deuxième configuration d'assemblage, la surface de base (2) reposant en dessous de l'étagère (106) et la paroi d'espacement (3) reposant sur le dos (102) ; ledit canal (1) pouvant être relié à l'étagère (106) par des moyens de connexion à expansion par serrage (110) pouvant être engagés sur la paire de trous (25), présents sur la paroi de base (2), et dans la pluralité de trous (109) présents sur l'étagère (106) ; ladite pluralité de prises multiples (M) reliée au canal (1) étant accessible au-dessus de l'étagère (106).

14. Armoire (100) selon la revendication 12, **caractérisée en ce que** lorsque le canal (1) et l'étagère (106) sont reliés dans la première configuration d'assemblage, une autre étagère (106) en butée sur le dos (102) est placée à côté en appui sur le canal (1) et est verrouillée dans une direction orthogonale à celui-ci par des moyens de fixation reliés à l'armoire (100).
